# EUROPEAN PATENT APPLICATION

(11) **EP 3 484 197 A1**
(43) Date of publication of application: **15.05.2019**
(21) Application number: 17001859.2
(22) Date of filing: 13.11.2017
(51) Int. Cl.: H04W 8/18

(54) **PROVISIONING OF GLOBAL PROFILE META DATA**

(71) Applicant: Giesecke+Devrient Mobile Security GmbH, 81677 München (DE)
(72) Inventor: Nitsch, Nils, 85570 Markt Schwaben (DE); Huber, Ulrich, 81475 München (DE)

(57) **Abstract**

The present invention is directed towards a method for fine-grained profile management on an embedded Universal Integrated Circuit Card, eUICC for short. The suggested solution provides the advantage that upon firmware updates of the eUICC, additional functionality can be used for which profile meta data is required. Furthermore, existing changes regarding already deployed profile meta data are maintained. The present invention is furthermore directed towards an embedded Universal Integrated Circuit Card as such as well as a network protocol and a system being arranged in accordance with the suggested method. Furthermore, a computer program product is suggested implementing the provided method steps.

## Description

The present invention is directed towards a method for fine-grained profile management on an embedded Universal Integrated Circuit Card, eUICC for short. The suggested solution provides the advantage that upon firmware updates of the eUICC, additional functionality can be used for which profile meta data is required. Furthermore, existing changes regarding already deployed profile meta data are maintained. The present invention is furthermore directed towards an embedded Universal Integrated Circuit Card as such as well as a network protocol and a system being arranged in accordance with the suggested method. Furthermore, a computer program product is suggested implementing the provided method steps.

US 2017/0222991 A1 teaches an embedded Universal Integrated Circuit Card for which profile management is performed. According to this disclosure a profile can be enabled, disabled, or deleted.

US 9,531,831 B1 teaches an end device comprising a secure element, wherein the secure element stores multiple subscription profiles, the end interface furthermore comprising a communication interface.

Deployment of Subscriber Identity Module functionality via an over-the-air-interface is commonly known. Especially, remote Subscriber Identity Module provisioning is standardized according to the GSMA specification SGP.22. This document is available in different versions, for instance version 1.0 and version 2.2. The latest version of the Remote SIM Provisioning specification is dated 1 September 2017. The document can be freely obtained from the GSM association under the title "RSP Technical Specification, version 2.2, 01 September 2017".

According to the state of the art, so-called embedded Universal Integrated Circuit Cards, eUICC for short, are commonly known, which are secure elements being embedded and accordingly built into a mobile device. An eUICC is also named eSIM and is generally fixed to the mobile device, wherein previous versions of SIM are removable. As newer versions of a SIM card are non-removable, software is required for allowing the user to change the operator. Previously, a mobile network operator was changed merely by exchanging the SIM card, which is performed by a change in software instructions in case the SIM card is not removable. To do so, remote provisioning and management of machine-to-machine connections allowing the over-the-air provisioning of an initial operator subscription is introduced. Using the Remote SIM Provisioning allows the user to subsequently change the subscription from one operator to another.

In case the operating system of the eUICC is changed or updated or if a firmware update is accomplished such that a new version of Remote SIM Provisioning is provided, it may occur that new functionality cannot be used because of missing profile meta data. Typically, new versions of specifications provide additional functionality, which can be used only in case appropriate meta data is available. In case such meta data is missing the functionality cannot be used. Such a problem may occur if an old profile is downloaded being conform to an older specification, which does not introduce such meta data.

If new functionality is introduced due to an update of the operating system or the firmware data, profiles remain unchanged, which prevents usage of the new functionality. However, according to the state of the art, in such a case previous profiles are deleted and replaced by newly downloaded profiles. In case the mobile network operator has already accomplished changes on such profiles, they are lost as they are overwritten by new profiles. Another problem arises in case profile meta data items are missing, which are then set to a default value according to the state of the art. Consequently, no configuration is available regarding the handling of a mixture of previously stored meta data items and newly obtained meta data items.

Summarizing the above, typically two problems occur according to the state of the art in the case of an update of the operating system or the firmware of the eUICC, firstly, additional functionality cannot be used due to missing profile meta data, and secondly, in case previous versions of profile meta data is overwritten, previously introduced changes are likewise overwritten.

Accordingly, it is an object of the present invention to provide an improved method for fine-grained profile management on an embedded Universal Integrated Circuit Card. Such a solution shall consider the specific requirements of Remote SIM Provisioning on an embedded Universal Integrated Circuit Card. It is furthermore an object of the present invention to provide an embedded Universal Integrated Circuit Card as such along with a network protocol for profile management along with a system being arranged according to the suggested method. Moreover, a computer program product shall be provided implementing the suggested method.

The object is solved according to features of independent claim 1. Further technical contributions are provided by dependent claims.

Accordingly, a method for fine-grained profile management on an embedded Universal Integrated Circuit Card is suggested, comprising the steps of performing an update procedure of control instructions being stored on the embedded Universal Integrated Circuit Card, provisioning of profile meta data items along with a usage indicator for respectively each profile meta data item, wherein the usage indicator specifies the relationship between each provisioned meta data item and respective meta data items being stored on the embedded Universal Integrated Circuit Card before performing the update procedure. The person skilled in the art recognizes that the introduced method steps may comprise additional substeps and may be performed iteratively and/or in a different order.

The present invention aims at fine-grained profile management as not the whole profile in its entireness is enabled, disabled, or deleted. According to the present invention, the profile meta data is separated into items, which can be addressed separately. Consequently, not the profile is addressed but rather profile components and accordingly, it is possible to independently manage meta data items. As meta data items can be written independently, the suggested method allows that previous versions of meta data items remain on the embedded Universal Integrated Circuit Card and merely newly obtained meta data items are implemented. Consequently, previous versions of meta data items can be maintained such that changes of the mobile network operator being applied on such meta data items are not lost and in addition newly introduced meta data items are installed.

The meta data serves as configuration data being required to accomplish provided functionality. In case the eUICC is updated and accordingly a newer version of Remote SIM Provisioning is installed the newly introduced functionality might require additional meta data. In case such meta data items are provisioned along control instructions, they were installed using default values according to the state of the art. Such a disadvantage is overcome and provisioned meta data items can be set individually by usage of the present invention. Accordingly, the profile management can be performed on meta data item level and furthermore different versions of meta data items can be handled due to the provision of execution priorities.

According to the suggested method, performing an update procedure is accomplished as a preliminary step. This update procedure refers to control instructions such as the update of firmware or the operating system of the eUICC. Furthermore, a new version of Remote SIM Provisioning can be provided. In case the update procedure provides control instructions, which require additional meta data, the provisioning of the update procedure includes the provisioning of profile meta data items along with a usage indicator for respectively each profile meta data item. In this way it is possible not to completely overwrite old profiles but it is rather the case that merely those meta data items are provided which are required for performing the newly introduced functionality. In this way previously store meta data items can be maintained and changes are preserved.

According to the present invention it is possible to provide new versions of meta data items being already stored on the eUICC. Hence, the question arises how to proceed with such meta data items which are already stored on the eUICC. Such information is provided by the usage indicator, which can be provided for each of the profile meta data items, respectively. Such a usage indicator may rule that previously stored meta data items are either upheld, replaced, or superimposed. In case previously stored meta data items are upheld, no changes apply. In case previously stored meta data items are replaced, their values are no longer considered but the respective meta data items are newly initialized. In case previous versions of meta data items are superimposed, the suggested method firstly checks whether new versions of meta data items are present and in a positive case uses the newly provided meta data item. Secondly, in a negative case, namely when no new version of a meta data item is provided, the previous version of meta data items are used. Hence, the respective meta data item refers to another version of the same parameter or parameters.

Summarizing this feature, the usage indicator specifies a relationship indicating how to proceed further with newly provisioned meta data items regarding previously stored meta data items. Typically, in case new meta data items are provided, meaning that such meta data items are not present on the eUICC before performing the update procedure, the currently provided meta data items are used.

This provides the advantage that according to the present invention, functionality being provided during an update procedure can be used as respective profile meta data items are provided. However, already established meta data items are maintained and changes, for instance being performed by the mobile network operator, are maintained.

Summarizing the above, the present invention overcomes the disadvantage that existing profiles would have to be deleted and newly loaded in case an operating system update or a firmware update is accomplished. This would provide problems for the Mobile Network Operator, MMO for short, because after initially loading profiles typically changes are applied. Accordingly, the disadvantage is overcome that either the newly provided functionality cannot be used or already established profile data would be lost. Considering the technical teaching of the present invention, it is possible to update specific profile meta data items dynamically during runtime.

If not indicated otherwise, terminology in the context of the present invention is used in accordance with the specification by GSMA "SGP.22-RSP Technical Specification". The underlying concepts are in conformance with this specification starting from version 1.0, preferably version 2.2.

According to an aspect of the present invention, the update procedure updates an operating system and/or firmware data of the embedded Universal Integrated Circuit Card. This provides the advantage that a usage scenario in the context of Remote SIM Provisioning can be addressed and accordingly the control instructions, as suggested according to the claimed method, may for instance be present as an operating system or firmware data. Furthermore, it is possible to update the Subscriber Identity Module or respective functionality.

According to a further aspect of the present invention, performing the update procedure triggers the step of provisioning. This provides the advantage that upon deployment of install routines and accomplishment of the update, the respective profile meta data items along with the usage indicators are provided. It may also be the case that performing the update procedure and provisioning of profile meta data along with the usage indicator is accomplished in parallel.

According to a further aspect of the present invention, profile meta data items are profile components according to the GSMA SGP.22-RSP Technical Specification. This provides the advantage that especially components of the SGP.22 specification can be used in the context of the present invention. According to this specification, a profile component is an element of the profile, when installed in the eUICC and may be one of the following: an element of the filed system, an application, profile meta data and a so-called MNO-SD. MNO-SD is an abbreviation for Mobile Network Operator Security Domain. It is part of the profile, owned by the operator, providing the secured channel to the operator's Over The Air OTA platform. It is used to manage the content of a profile once the profile is enabled.

According to a further aspect of the present invention, at least one usage indicator specifies said relationship between meta data items as "replace previous meta data item", "set default value in case previous data item is not present", or "replace previous meta data item in case new version is not present". This provides the advantage that the relationship can be further specified and an individual relationship amongst meta data items is created. Accordingly, the relationship between existing meta data items and newly provisioned meta data items is clarified. According to the present invention, a newly provided meta data item might replace a meta data item being already stored on the eUICC. In case such a meta data item is not already present on the eUICC and accordingly a new meta data item is provided, the new meta data item is used or meta data items may be superimposed. Superimposing means that first newly provided data items are searched and in case no newly introduced meta data items are found, individual meta data items are used.

According to a further aspect of the present invention, said relationship provides a hierarchy of data item priorities. This provides the advantage that according to the suggested method it can be specified in which order meta data items are used. The hierarchy may for instance specify that typically newly provisioned meta data items are used and in case no new meta data items are present a previous version of a meta data item being already stored on the eUICC may be used. In case several versions of meta data items are present, the priority may then specify that always the newest meta data item is used. In general, so-called global meta data items may have a greater priority than individual meta data items and accordingly global meta data items are first searched and afterwards, in case of an absence of such data, individual meta data is used.

According to a further aspect of the present invention, the profile meta data items are stored in the Universal Integrated Circuit Card. This provides the advantage that the meta data items are locally maintained although they are provided through a remote server. Consequently, they are stored in a memory of the Universal Integrated Circuit Card and can be managed using a respective toolkit.

According to a further aspect of the present invention, meta data items being stored on the embedded Universal Integrated Circuit Card are maintained. This provides the advantage that not the whole profile data is exchanged but rather single meta data items are newly introduced and meta data items being already stored on the eUICC are maintained and further used. Consequently, available meta data items are not overwritten as they may contain changes applied by the mobile network operator. In this way changes are not overwritten and for instance only new meta data items are stored, which do not overwrite previously installed meta data items.

According to a further aspect of the present invention, meta data items referring to applet updates, file updates, authentication sequence number and/ or mobile network operator data are maintained. This provides the advantage that specific information being provided by the mobile network operator are not overwritten and accordingly, they are maintained. The meta data items are merely enhanced without overwriting previous amendments.

According to a further aspect of the present invention, the control instructions being stored on the embedded Universal Integrated Circuit Card are updated using remote Subscriber Identity Module provisioning. This provides the advantage that in case a new version of the Remote SIM Provisioning is provided the respective meta data items can likewise be provided and accordingly compatibility with the new Remote SIM Provisioning version is guaranteed.

According to a further aspect of the present invention, the usage indicator is interpreted by the Issuer Security Domain Route according to the GSMA SGP.22-RSP Technical Specification. This provides the advantage that in case profile meta data items are required at runtime the so-called ISD-R is able to interpret such data and provide the respective information.

The object is also solved by an embedded Universal Integrated Circuit Card being arranged to perform the suggested method.

The object is also solved by a network protocol for fine-grained profile management on an embedded Universal Integrated Circuit Card being arranged in accordance with the suggested method.

The object is also solved by a system for fine-grained profile management on an embedded Universal Integrated Circuit Card, comprising means being arranged to perform an update procedure of control instructions being stored on the embedded Universal Integrated Circuit Card, a remote server being arranged to provision profile meta data items along with a usage indicator for respectively each profile meta data item, wherein the usage indicator specifies the relationship between each provision meta data item and respective meta data items being stored on the embedded Universal Integrated Circuit Card before performing the update procedure.

The object is also solved by a computer program product being arranged to perform the suggested method and operate the suggested system.

According to the present invention, the suggested method is arranged to operate the embedded Universal Integrated Circuit Card as well as the suggested system for fine-grained profile management. Moreover, the embedded Universal Integrated Circuit Card and the system are both arranged to perform the suggested method. The network protocol is likewise arranged in accordance with the suggested method and can be accomplished using network components. Consequently, the suggested method can be performed using the network protocol, which may involve a server for provisioning of update procedures along with profile meta data items. The update procedure is provisioned to the eUICC and is locally stored. Upon reception of update commands the software of the eUICC is then updated and profile meta data items along with a usage indicator is provided accordingly.

Further advantages of the present invention are demonstrated with reference to the accompanying figure, which shows:

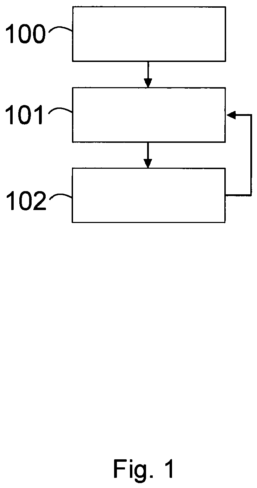

- Fig. 1:: a schematic flowchart depicting a method for fine-grained profile management on an embedded Universal Integrated Circuit Card according to an aspect of the present invention.

Fig. 1 demonstrates a method for fine-grained profile management on an embedded Universal Integrated Circuit Card comprising the steps of performing 100 an update procedure of control instructions being stored on the embedded Universal Integrated Circuit Card and provisioning 101 of profile meta data items along with a usage indicator for respectively each meta data item, wherein the usage indicator specifies the relationship between the provisioned 101 meta data item and the respective meta data item being stored on the embedded Universal Integrated Circuit Card before performing 100 the update procedure.

The person skilled in the art recognizes that the method steps may contain further substeps and may be performed iteratively and/or in a different order. For instance, performing an update procedure and provisioning of profile meta data item may be performed in parallel. Likewise, the provisioning of profile meta data items can be performed several times such that a plurality of profile meta data items is provided.

In the context of the present invention the profile meta data items may be provided such that for each profile meta data item one usage indicator is provided describing a relationship between the newly provided meta data items and already stored meta data items. Accordingly, the number of provided profile meta data items equals the number of usage indicators. They may be pairwise, wherein one usage indicator is assigned to each of the meta data items.

## Claims

1. A method for fine-grained profile management on an embedded Universal Integrated Circuit Card, comprising the steps:
- performing (100) an update procedure of control instructions being stored on the embedded Universal Integrated Circuit Card;
- provisioning (101) of profile meta data items along with a usage indicator for respectively each profile meta data item, **characterized in that** the usage indicator specifies (102) the relationship between the provisioned (101) meta data item and the respective meta data item being stored on the embedded Universal Integrated Circuit Card before performing (100) the update procedure.

2. The method according to claim 1, **characterized in that** the update procedure updates an operating system and/or firmware data of the embedded Universal Integrated Circuit Card.

3. The method according to claim 1 or 2, **characterized in that** performing (100) the update procedure triggers the step of provisioning (101).

4. The method according to any one of the preceding claims, **characterized in that** profile meta data items are profile components according to the GSMA SGP.22 - RSP Technical Specification.

5. The method according to any one of the preceding claims, **characterized in that** at least one usage indicator specifies said relationship between meta data items as "replace previous meta data item", "set default value in case a previous meta data item is not present" or "replace previous meta data item in case new version is not present".

6. The method according to any one of the preceding claims, **characterized in that** said relationship provides a hierarchy of meta data item priorities.

7. The method according to any one of the preceding claims, **characterized in that** the profile meta data items are stored on the embedded Universal Integrated Circuit Card.

8. The method according to any one of the preceding claims, **characterized in that** the meta data items being stored on the embedded Universal Integrated Circuit Card are maintained.

9. The method according to any one of the preceding claims, **characterized in that** the meta data items referring to applet updates, file updates, authentication sequence numbers and/or mobile network operator data are maintained.

10. The method according to any one of the preceding claims, **characterized in that** the control instructions being stored on the embedded Universal Integrated Circuit Card are updated using remote subscriber identity module provisioning.

11. The method according to any one of the preceding claims, **characterized in that** the usage indicator is interpreted by the Issuer Security Domain Root according to the GSMA SGP.22 - RSP Technical Specification.

12. An embedded Universal Integrated Circuit Card being arranged to perform the method steps of any one of claims 1 to 11.

13. A network protocol for fine-grained profile management on an embedded Universal Integrated Circuit Card, comprising instructions being arranged to perform a method in accordance with any one of the preceding claims 1 to 11, when being executed by network components.

14. A system for fine-grained profile management on an embedded Universal Integrated Circuit Card, comprising:
- means being arranged to perform (100) an update procedure of control instructions being stored on the embedded Universal Integrated Circuit Card;
- a remote server being arranged to provision (101) profile meta data items along with a usage indicator for respectively each profile meta data item, **characterized in that** the usage indicator specifies (102) the relationship between the provisioned (101) meta data item and the respective meta data item being stored on the embedded Universal Integrated Circuit Card before performing (100) the update procedure.

15. A computer program product being arranged to perform a method in accordance with any one of the preceding claims 1 to 11, when being executed on a computer.
